# EUROPEAN PATENT SPECIFICATION

(11) **EP 0 836 675 B1**
(45) Date of publication and mention of the grant of the patent: **16.01.2002**
(21) Application number: 96923167.9
(22) Date of filing: 05.07.1996
(51) Int. Cl.: F02D 15/04

(54) **ARRANGEMENT IN A CYLINDER HEAD**
ANORDNUNG IN EINEM ZYLINDERKOPF
DISPOSITIF DANS UNE CULASSE DE CYLINDRE

(30) Priority: 06.07.1995 SE 9502470
(43) Date of publication of application: 22.04.1998
(73) Proprietor: Fanja Ltd., St. Helier, Jersey JE4 9XA (GB)
(72) Inventor: HEDELIN, Lars, S-182 63 Djursholm (SE)
(74) Representative: Hellborg, Karl Torild
(86) International application number: SE9600920
(87) International publication number: WO9702417

(56) References cited:
- WO-A-96/24762
- DE-A- 2 426 985
- DE-A- 3 339 578
- US-A- 996 378
- US-A- 2 728 332
- US-A- 3 168 083
- US-A- 5 101 776

## Description

The invention relates to a cylinder head device of an internal combustion engine with at least one cylinder. For each cylinder in the engine a combustion chamber is defined by the cylinder head together with the cylinder wall and the end surface of a piston in the cylinder. The cylinder head for each cylinder comprises, firstly, at least one inlet channel with an inlet valve for regulating the communication between the inlet channel and the combustion chamber, secondly, at least one outlet chamber with an outlet valve for regulating the communication between the combustion chamber and the outlet channel and, thirdly, at least one spark plug.

Cylinder heads of the above mentioned types are used in almost all internal combustion engines which are manufactured for use in motor vehicles and the like, for example. The valves are usually in the form of poppet or disc valves, which are very effective for regulating gas exchange in the engine.

In designing internal combustion engines, it is a general goal to increase the efficiency of the engine. With increased efficiency it is possible to reduce fuel consumption and reduce the percentage of harmful emissions in the engine exhaust. For engines working under varying operating conditions, e.g. in motor vehicles, it is a goal to make the engines more adaptable to prevailing operating conditions. In order to achieve this, it has been proposed to change the compression ratio in the engine cylinders, to change the fuel supply and ignition system and to change the valve opening and closing times. These steps can be taken separately or in various combinations.

Changing the compression ratio in the engine cylinders is an effective measure for adapting the engine to various operating conditions, and thereby achieve an increase in efficiency. Various devices for achieving a change in the engine compression ratio during operation are previously known, but certain of these known devices are of complicated design and are therefore expensive to manufacture and maintain, while other known designs do not provide satisfactory results in practice. There is therefore a need for a simple device for changing the compression ratio in an internal combustion engine during operation for adaptation to various operating conditions.

**DE-A-2426 985** (figures, claims) discloses a cylinder head 15 of an internal combustion engine with at least one cylinder, a combustion chamber 1 being defined by the cylinder head together with the cylinder wall and the end surface of a piston 14 in the cylinder, the cylinder head comprising , at least one inlet and outlet channel with an inlet/outlet valve 16/17 each;
the cylinder head for each cylinder is made with a chamber, which is in communication with the combustion chamber; each chamber is provided with a a piston displaceable between a first position, in which it cuts off the communication between the chamber and the combustion chamber and a second position, in which the chamber has free communication with the combustion chamber, and the valve/piston is formed with a holder 4 for a spark plug, which extends through the piston and protrudes with its end into the combustion chamber or the chamber.

The piston is formed as a sleeve for the spark plug , the sleeve has at its end adjacent the combustion chamber a conical sealing element , which extends radially from the sleeve and has a contact surface cooperating, when the sleeve is in its first position, with a seat in the cylinder head between the chamber and the combustion chamber.

The present invention is therefore intended to achieve a cylinder head device of an internal combustion engine, said device making it possible to change the compression ratio in the engine cylinders during operation in a simple and reliable manner. This is achieved according to the invention by means of a device which is provided with those features which are disclosed in the characterizing clause of claim 1.

Advantageous embodiments of the device according to the invention are defined in the subclaims.

The invention will be described in more detail below with reference to the accompanying drawings, which show schematic, partially cut away views of the upper portion of an internal combustion engine with certain components left out.
- Figs. 1-5: show corresponding sectional views of the various components in the cylinder head and the upper portion of the engine in various positions, and
- Figs. 6a-i: show, in extremely simplified form, various conceivable variants of a cylinder head in accordance with the invention as seen from the combustion chamber.

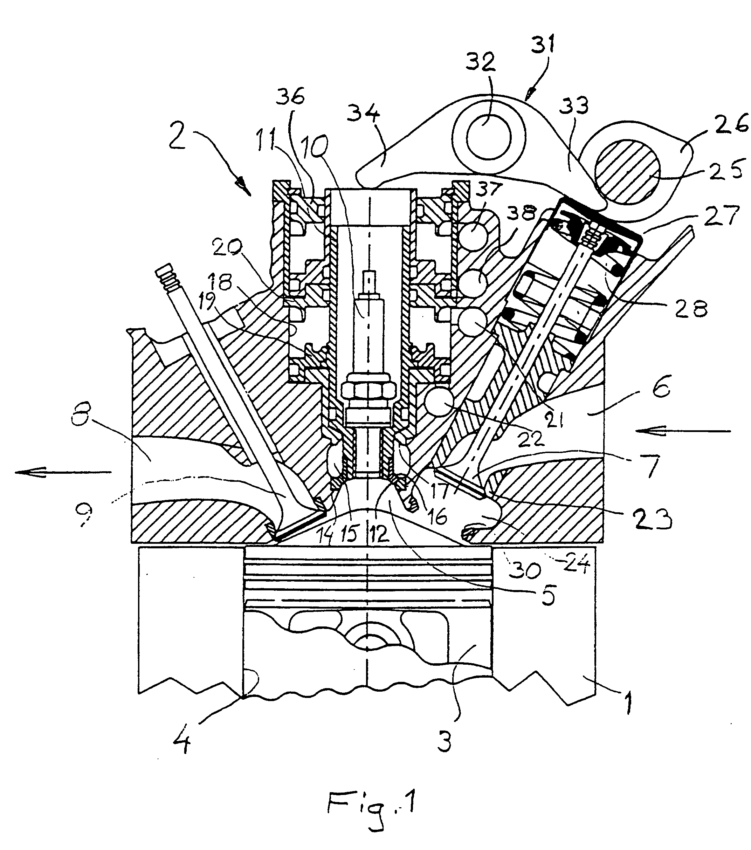

Figs. 1-5 show a portion of an internal combustion engine with an engine block 1 and a cylinder head 2. There is also shown a portion of a piston 3, which can reciprocate in a cylinder 4. The walls of the cylinder 4 define, together with the surface of the cylinder head 2 facing the cylinder 4 and the end surface of the piston 3, a combustion chamber 5. The cylinder head 2 is also made with an inlet channel 6, in which there is an inlet valve 7 for regulating the communication between the inlet channel 6 and the combustion chamber 5. There is also in the cylinder head 2 an exhaust channel 8 with an exhaust valve 9 for regulating the communication between the combustion chamber 5 and the exhaust channel 8. Furthermore, there is a spark plug 10 mounted in the cylinder head 2 in such a manner that its electrode end at least partially protrudes into the combustion chamber 5.

As can be seen in the drawings, the spark plug 10 is screwed into a sleeve 11, which functions as a valve means, as will be described in more detail below. Fig. 1 shows the sleeve 11 in a first position, in which a sealing element 12, disposed at the sleeve 11 and located closest to the combustion chamber 5, with a contact surface 13 abuts against a seat 14 in the cylinder head 2. This provides a seal between the combustion chamber 5 and a chamber 15, which is formed in the cylinder head 2 and through which the sleeve 11 extends in the position shown in Fig. 1.

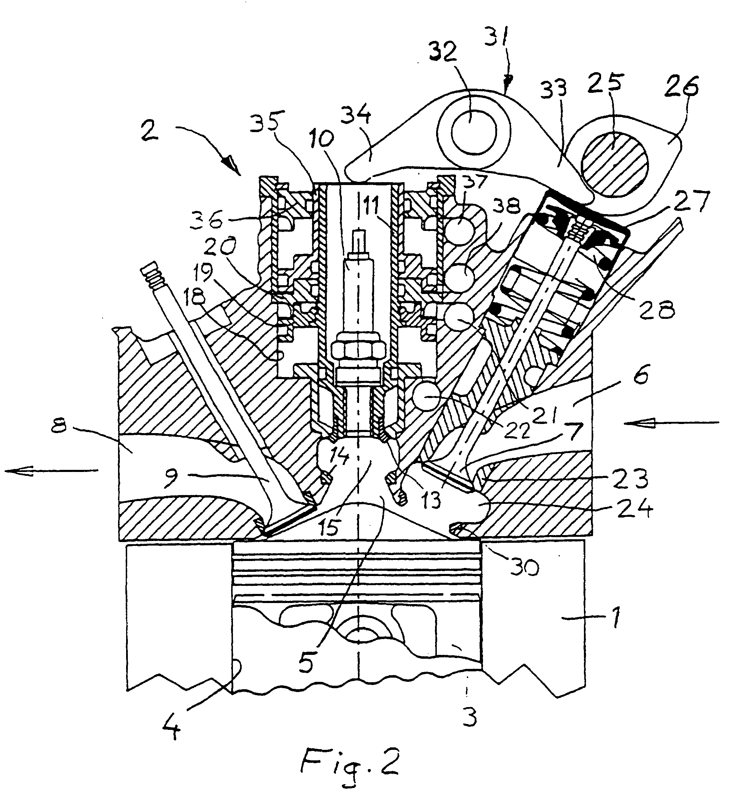

Fig. 2 shows the sleeve 11 in a second position, in which the sealing element 12 abuts with a second contact surface 16 against a second seat 17 in the cylinder head 2 at the end of the chamber 15 remote from the combustion chamber 5. This means that the chamber 15 has in this position free communication with the combustion chamber 5 and in practice is a part thereof. By moving the sleeve 11 between the first position shown in Fig. 1 and the second position shown in Fig. 2, it is therefore possible to provide two different compression ratios in the engine to adapt the engine to different operating conditions.

In order to move the valve means or sleeve 11 between the two positions, an operating cylinder 18 is disposed in the cylinder head 2 coaxial to the sleeve 11. On the sleeve 11 an operating piston 19 is is fixed. The operating piston 19 is displaceable in the operating cylinder 18 and is sealed against the cylinder wall. The operating cylinder 18 is also provided with an intermediate wall, which is fixed and is intended for a purpose which will be described in more detail below. The sleeve 11 extends through the intermediate wall 20.

Two pressure medium channels 21 and 22 open into the operating cylinder 18 on either side of the operating piston 19. By supplying pressure medium to the operating cylinder 18 through one or the other of the pressure medium channels 21 or 22, the operating piston 19, and thereby also the sleeve 11 with it, is displaced between its two positions. The pressure medium channels 21 and 22 are coupled in a manner not shown in more detail here, to a pressure medium system (not shown) with a pressure medium source and the required valves for regulating the pressure medium flow to and from the pressure medium channels 21 and 22.

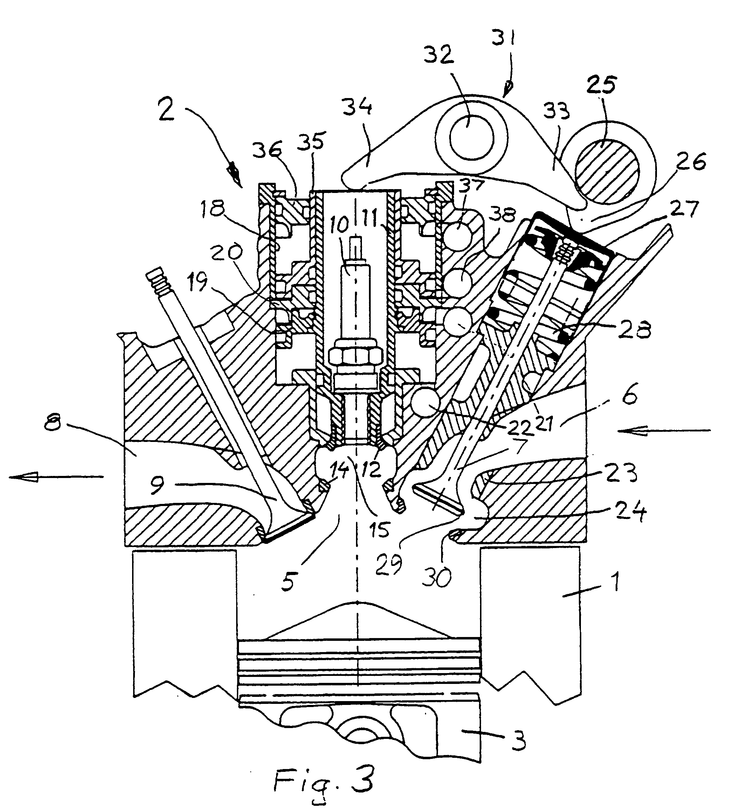

Figs. 1 and 2 show the inlet valve 7 closed against the valve seat 23 in the cylinder head 2. The valve seat 23 is located at the end of a second chamber 24 remote from the combustion chamber 5. The second chamber constitutes in this position a portion of the combustion chamber 5. The valve 7 is operated in a conventional manner by means of a cam shaft 25 and a cam lobe 26 which actuates the valve 7 by means of a tappet 27. A valve spring 28 biases the valve 7 towards a closed position against the seat 23. Fig. 3 shows the valve 7 in the open position actuated by the lobe 26 of the cam shaft 25. It is also evident that the second chamber 24 here constitutes an expanded portion of the inlet channel 6, so that the flow about the inlet valve 7 is not affected negatively.

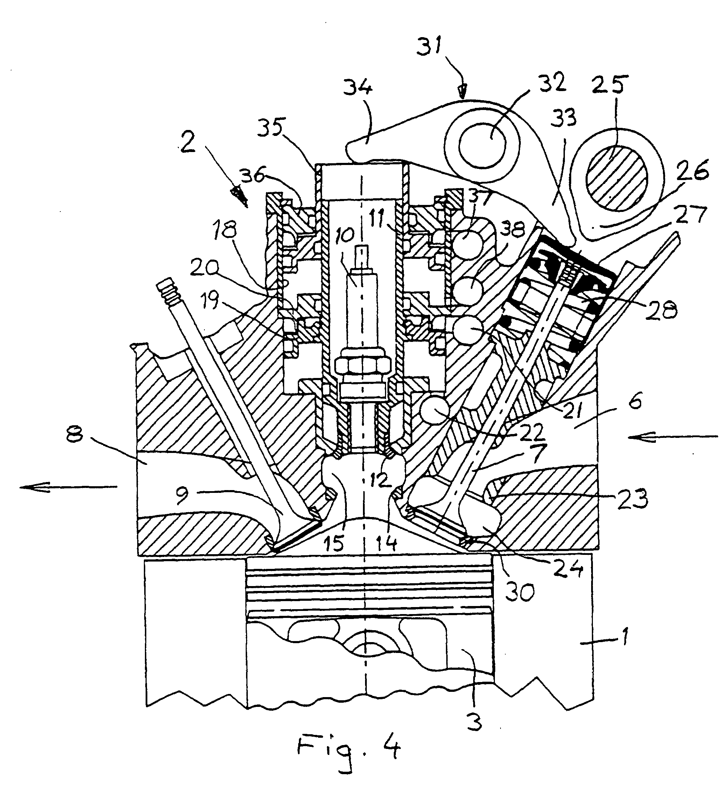

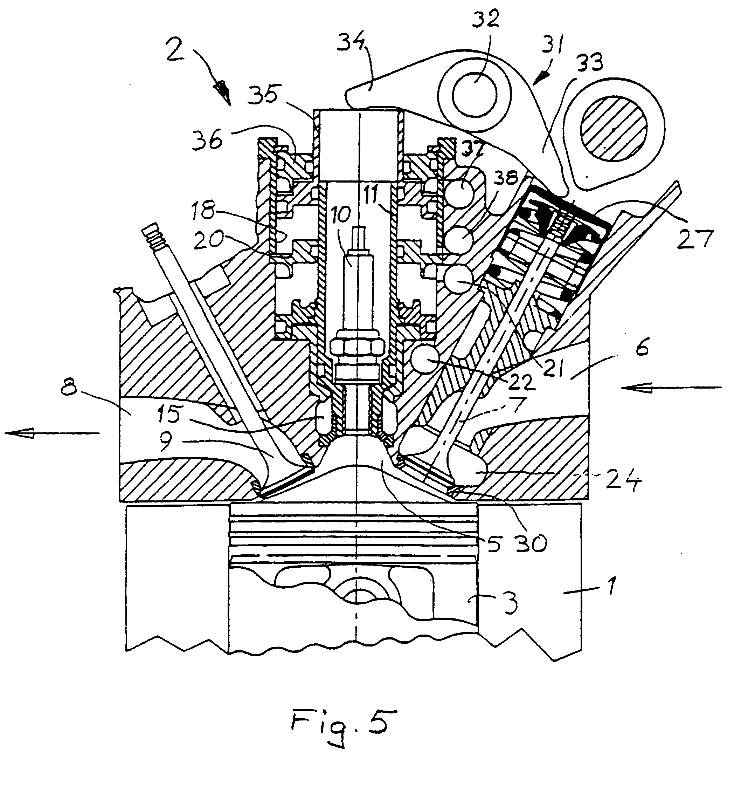

In Figs. 4 and 5 the inlet valve 7 is shown in another position, in which it abuts with a contact surface 29 against a seat 30 in the cylinder head 2 at the connection between the combustion chamber 5 and the second chamber 24. For moving the valve 7 to the position in contact with the seat 30, a rocker 31 is pivotally mounted on a shaft 32, which is mounted in the cylinder head 2 in a manner not shown in more detail here. One arm 33 of the rocker 31 actuates the tappet 27, while the other arm 34 is actuated by a second operating piston 35, which is displaceably arranged in the operating cylinder 18 on the opposite side of the intermediate valve 20 with respect to the first operating piston 19. The second operating piston 35 is thus in the form of a ring piston, and the sleeve 11 extends through at least a portion of the second operating piston 35. At its end remote from the intermediate wall 20, the operating cylinder 18 is sealed by means of an end wall 36 with an opening through which the second operating piston 35 extends.

Two pressure medium channels 37 and 38 open into the operating cylinder 18 on either side of the second operating piston 35 in the space between the intermediate wall 20 and the end wall 36. By supplying pressure medium to the pressure medium channel 37 or 38, respectively, the second operating piston 37 can be displaced in the operating cylinder 18 between the position shown in Figs. 1-3, where the rocker 31 does not act on the tappet 27, and the position shown in Figs. 4 and 5 in which the arm 33 of the rocker 31, via the tappet 27, presses the inlet valve 7 into contact with the seat 30. The pressure medium channels 37 and 38 are connected to a pressure medium system (not shown) with a pressure medium source and required valves for regulating a pressure medium flow to or from, respectively, the pressure medium channels 37 and 38, respectively.

By either allowing the inlet valve 7 to work as a normal inlet valve against the valve seat 23 or keeping the inlet valve 7 closed against the seat 30, it is possible to achieve two different compression ratios in the cylinder 4 of the engine. When the inlet valve 7 is held closed against the seat 30, there must, of course, be at least one other inlet valve for the cylinder 4. It is also, of course, conceivable to use, instead of or in addition to the inlet valve 7, an exhaust valve for corresponding purposes, i.e. allowing an exhaust valve to work in a chamber in the manner described above for the inlet valve 7.

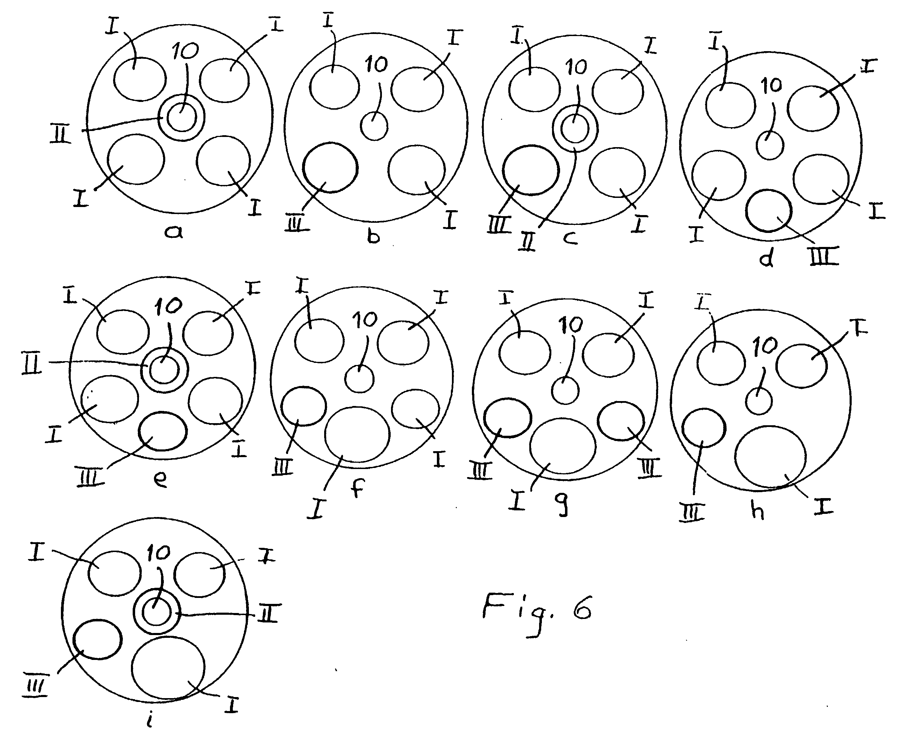

By using a conjoin/isolatable chamber with a valve means or a valve sleeve, such as the chamber 15 and the sleeve 11, and at least one other chamber with a valve, such as the chamber 24 with the valve 7, it is possible by suitable dimensioning of the chambers to change the compression ratio of the engine incrementally to adapt to various operating conditions. In order to illustrate a number of possible embodiments, Fig. 6 shows nine different embodiments in very schematic form. I designates inlet and exhaust valves of conventional type, while II designates valve means in the form of a sleeve with spark plug, corresponding to the sleeve 11 with the spark plug 10, and III designates valves with chambers corresponding to the valve 7 and the chamber 24. It should, however, be observed that the valves III can, of course, be either inlet or exhaust valves. It should also be observed that the embodiments shown in Fig. 6 are only examples and are not intended to provide a complete picture of all conceivable variants.

The invention is not limited to the above described examples. Rather, changes can be made within the scope of the following patent claims.

## Claims

1. Cylinder head (2) device of an internal combustion engine with at least one cylinder (4), for each cylinder (4) in the engine a combustion chamber (5) being defined by the cylinder head (2) together with the cylinder wall and the end surface of a piston (3) in the cylinder, the cylinder head (2) for each cylinder (4) comprising: firstly, at least one inlet channel (6) with an inlet valve (7) for regulating the communication between the inlet channel (6) and the combustion chamber (5), secondly, at least one exhaust channel (8) with an exhaust valve (9) for regulating the communication between the combustion chamber (5) and the exhaust channel (8) and, thirdly, at least one spark plug (10), wherein the cylinder head (2) for each cylinder (4) is made with a chamber (15), which is in communication with the combustion chamber (5), each chamber (15) being provided with a movable sleeve (11) having a holder for the spark plug (10), which extends through the sleeve (11) and protrudes with its end into the combustion chamber (5) or the chamber (15), **characterized in that** the sleeve is formed as a valve means (11), the valve means (11) at its end adjacent the combustion chamber being provided with a sealing element (12), which extends radially outwards from the sleeve (11) and has a contact surface (13) for cooperation, when the sleeve (11) is in a first position, in which it cuts off and seals the communication between the chamber (15) and the combustion chamber (5), with a seat (14) in the cylinder head (2), said seat being disposed between the chamber (15) and the combustion chamber (5), the valve means (11) being movable to a second position, in which the chamber (15) has free communication with the combustion chamber (5).

2. Device according to Claim 1, **characterized in that** the sealing element (12) is an essentially radially outwardly directed flange, which is located at the end of the sleeve (11) adjacent the combustion chamber (5).

3. Device according to one of Claims 1 or 2, **characterized in that** operating means (18, 19, 21, 22) are arranged in the cylinder head (2) for displacing the valve means (11) between its two positions.

4. Device according to Claim 3, **characterized in that** the operating means comprise an operating piston (19) fixed to the valve means (11), said operating piston being displaceable in an operating cylinder (18) in the cylinder head (2), a pressure medium channel (21; 22) opening into the operating cylinder (18) on one side of the operating piston (19).

5. Device according to Claim 4, **characterized in that** the second pressure medium channel (22; 21) opens into the operating cylinder (18) on the opposite side of the operating piston (19) with respect to the first pressure medium channel (21; 22).

6. Device according to Claims 4 or 5, **characterized in that** each pressure medium channel (21, 22, 37, 38) is coupled to a pressure medium system with a pressure medium source and one or more valves for regulating a pressure medium flow to or from each pressure medium channel.

## Patentansprüche

1. Zylinderkopf-(2)-Vorrichtung einer Brennkraftmaschine mit mindestens einem Zylinder (4), wobei für jeden Zylinder (4) in der Maschine eine Brennkammer (5) durch den Zylinderkopf (2) zusammen mit der Zylinderwand und der Endfläche eines Kolbens (3) in dem Zylinder festgelegt ist, wobei der Zylinderkopf (2) für jeden Zylinder (4) umfaßt:
erstens, mindestens einen Einlaßkanal (6) mit einem Einlaßventil (7) zum Regulieren der Verbindung zwischen dem Einlaßkanal (6) und der Brennkammer (5),
zweitens, mindestens einen Auslaßkanal (8) mit einem Auslaßventil (9) zum Regulieren der Verbindung zwischen der Brennkammer (5) und dem Auslaßkanal (8), und
drittens, mindestens eine Zündkerze (10), wobei der Zylinderkopf (2) für jeden Zylinder (4) mit einer Kammer (15) ausgestattet ist, die in Verbindung mit der Brennkammer (5) steht, wobei jede Kammer (15) mit einer beweglichen Hülse (11) mit einem Halter für die Zündkerze (10) versehen ist, die sich durch die Hülse (11) erstreckt und mit ihrem Ende in die Brennkammer (5) oder die Kammer (15) vorsteht,
**dadurch gekennzeichnet, daß**
die Hülse als Ventilmittel (11) ausgebildet ist, das Ventilmittel (11) an seinem benachbart der Brennkammer liegenden Ende mit einem Dichtungselement (12) versehen ist, das sich von der Hülse (11) radial nach außen erstreckt und eine Kontaktfläche (13) zum Zusammenwirken mit einem Sitz (14) im Zylinderkopf (2) aufweist, wenn sich die Hülse (11) in einer ersten Position befindet, in der sie die Verbindung zwischen der Kammer (15) und der Brennkammer (5) unterbricht und abdichtet, wobei der Sitz zwischen der Kammer (15) und der Brennkammer (5) angeordnet ist und das Ventilmittel (11) zu einer zweiten Position bewegbar ist, in der die Kammer (15) eine freie Verbindung mit der Brennkammer (5) hat.

2. Vorrichtung gemäß Anspruch 1, **dadurch gekennzeichnet, daß** das Dichtungselement (12) ein im wesentlichen radial nach außen gerichteter Flansch ist, der an dem Ende der Hülse (11) benachbart der Brennkammer (5) gelegen ist.

3. Vorrichtung gemäß einem der Ansprüche 1 oder 2, **dadurch gekennzeichnet, daß** Betätigungsmittel (18,19,21,22) im Zylinderkopf (2) angeordnet sind, um das Ventilmittel (11) zwischen seinen zwei Positionen zu bewegen.

4. Vorrichtung gemäß Anspruch 3, **dadurch gekennzeichnet, daß** die Betätigungsmittel einen am Ventilmittel (11) befestigten Betätigungskolben (19), wobei der Betätigungskolben in einem Betätigungszylinder (18) im Zylinderkopf (2) bewegbar ist, und einen Druckmittelkanal (21;22), der sich auf einer Seite des Betätigungskolbens (19) zum Betätigungszylinder (18) hin öffnet, umfassen.

5. Vorrichtung gemäß Anspruch 4, **dadurch gekennzeichnet, daß**.sich der zweite Druckmittelkanal (22;21) hin auf der bezüglich des ersten Druckmittelkanals (21;22) entgegengesetzten Seite des Betätigungskolbens (19) zum Betätigungszylinder (18) öffnet.

6. Vorrichtung gemäß Anspruch 4 oder 5, **dadurch gekennzeichnet, daß** jeder Druckmittelkanal (21,22,37,38) mit einem Druckmittelsystem mit einer Druckmittelquelle und einem oder mehreren Ventil(en) zum Regeln einer Druckmittelströmung zu und von jedem Druckmittelkanal gekoppelt ist.

## Revendications

1. Dispositif pour culasse (2) de moteur à combustion interne ayant au moins un cylindre (4), pour chaque cylindre (4) du moteur une chambre de combustion (5) étant définie par la culasse (2) avec la paroi de cylindre et la surface d'extrémité d'un piston (3) dans le cylindre, la culasse (2) comprenant, pour chaque cylindre (4) : premièrement, au moins un canal d'admission (6) avec une soupape d'admission (7) pour réguler la communication entre le canal d'admission (6) et la chambre de combustion (5), deuxièmement, au moins un canal d'échappement (8) avec une soupape d'échappement (9) pour réguler la communication entre la chambre de combustion (5) et le canal d'échappement (8) et, troisièmement, au moins une bougie d'allumage (10), la culasse (2) pour chaque cylindre (4) étant munie d'une chambre (15), qui est en communication avec la chambre de combustion (5), chaque chambre (15) étant munie d'un manchon mobile (11) comportant un support pour la bougie (10), qui s'étend à travers le manchon (11) et fait saillie avec son extrémité dans la chambre de combustion (5) ou dans la chambre (15), **caractérisé en ce que** le manchon est conçu comme moyen formant soupape (11), le moyen formant soupape (11) en son extrémité adjacente à la chambre de combustion étant muni d'un élément d'étanchéité (12), qui s'étend radialement vers l'extérieur depuis le manchon (11) et comporte une surface de contact (13) servant à la coopération, lorsque le manchon (11) est dans une première position, dans laquelle il coupe de manière étanche la communication entre la chambre (15) et la chambre de combustion (5), avec un siège (14) dans la culasse (2), ledit siège étant disposé entre la chambre (15) et la chambre de combustion (5), le moyen formant soupape (11) étant mobile jusqu'à une deuxième position, dans laquelle la chambre (15) est en communication libre avec la chambre de combustion (5).

2. Dispositif selon la revendication 1, **caractérisé en ce que** l'élément d'étanchéité (12) est une bride globalement dirigée radialement vers l'extérieur, qui est située à l'extrémité du manchon (11) adjacente à la chambre de combustion (5).

3. Dispositif selon la revendication 1 ou 2, **caractérisé en ce que** des moyens d'actionnement (18, 19, 21, 22) sont agencés dans la culasse (2) pour déplacer le moyen formant soupape (11) entre ses deux positions.

4. Dispositif selon la revendication 3, **caractérisé en ce que** les moyens d'actionnement comprennent un piston d'actionnement (19) fixé au moyen formant soupape (11), ledit piston d'actionnement pouvant être déplacé dans un cylindre d'actionnement (18) prévu dans la culasse (2), un canal (21; 22) à milieu sous pression débouchant dans le cylindre d'actionnement (18) d'un côté du piston d'actionnement (19).

5. Dispositif selon la revendication 4, **caractérisé en ce que** le deuxième canal (22; 21) à milieu sous pression débouche dans le cylindre d'actionnement (18) du côté opposé du piston d'actionnement (19) par rapport au premier canal (21; 22) à milieu sous pression.

6. Dispositif selon la revendication 4 ou 5, **caractérisé en ce que** chaque canal (21, 22, 37, 38) à milieu sous pression est couplé à un système de milieu sous pression avec une source de milieu sous pression et une ou plusieurs soupapes pour réguler un écoulement de milieu sous pression vers ou provenant de chaque canal à milieu sous pression.
